# EUROPEAN PATENT APPLICATION

(11) **EP 0 977 440 A2**
(43) Date of publication of application: **02.02.2000**
(21) Application number: 99306084.7
(22) Date of filing: 30.07.1999
(51) Int. Cl.: H04N 7/26

(54) **Moving image sequence decoding device and method**

(30) Priority: 31.07.1998 JP 21811698
(71) Applicant: SONY CORPORATION, Tokyo 141 (JP)
(72) Inventor: Katayama, Hiroshi, c/o Sony Corp., Tokyo 141 (JP)
(74) Representative: Pratt, Richard Wilson

(57) **Abstract**

A decoding device and a decoding method make it sufficiently easy, in a practical sense, to convert the number of pixels. Disclosed is a decoding device for decoding coded data formed by exposing the video data to the stated coding processing including discrete cosine transform processing. This device comprises band-limitation processing means for applying band-limitation processing to the discrete cosine coefficient data so as to cut the high-frequency component, and interpolation processing means for applying the stated interpolation processing to the decoded image data. Besides, a method is disclosed for decoding coded data formed by exposing the video data to the stated coding processing including discrete cosine transform processing. This method comprises a step of applying band-limitation processing to the discrete cosine coefficient data so as to cut the high-frequency component, and a step of applying interpolation processing to the decoded image data so as to convert the number of pixels of the frame image based on the image data in a manner that it becomes coincident with the number of pixels of said frame image of the decoding object.

## Description

The present invention relates to a decoding device and a decoding method. Illustrative embodiments of the present invention relate to a decoding device and a decoding method for decoding video data coded by moving picture experts group (MPEG) system.

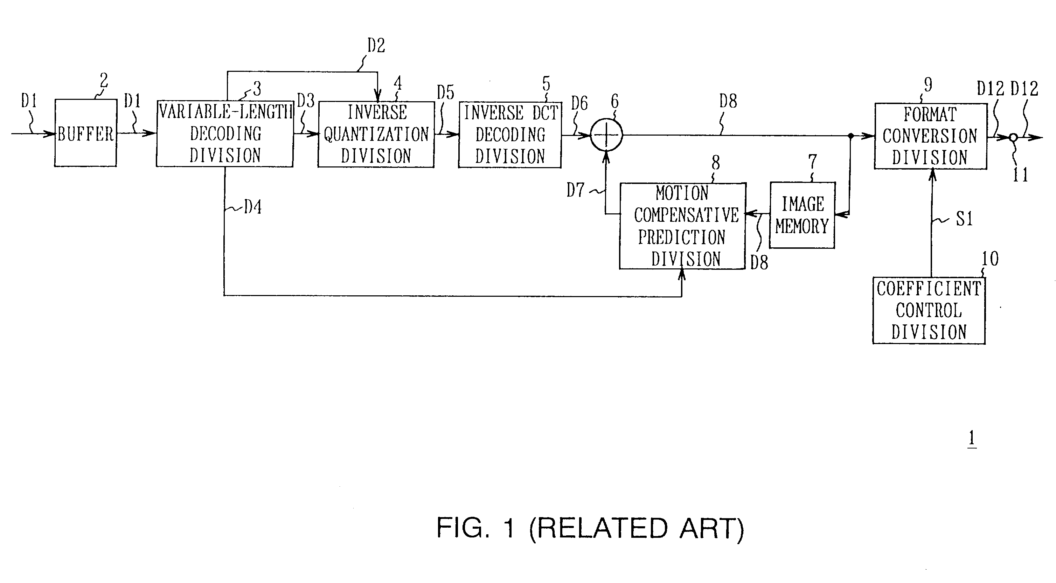

As a video decoding device, the one that is constructed as shown in Fig. 1 is already known.

In a video decoding apparatus 1 having such a configuration, coded data D1 formed by applying compression coding to video data of high definition television (HDTV) format of, for instance, 1920 pixels × 1080 lines is supplied from the exterior and inputted to a variable-length decoding division 3 via a buffer 2.

The variable-length decoding division 3 applies variable-length decoding of the stated system to the coded data D1 given via the buffer 2, and obtains the decoded information, which is comprised of the coding mode, the motion vector, the quantization information, the quantization discrete cosine transform (DCT) coefficient and others, for each macro block, which is comprised of the luminance signal, the color-difference signal and others of 16 pixels × 16 lines, and further sections this into subblocks, which is comprised of the luminance signal, the color-difference signal and others of 8 pixels × 8 lines; then, it sends the quantization DCT coefficient to an inverse quantization division 4 as the decoded data D3.

Besides, the variable-length decoding division 3 sends the quantization information, which is obtained by variable-length decoding processing of the coded data D1, to the inverse quantization division 4 as quantization scale data D2, while it sends the coding mode and the motion vector, which are obtained together with this, to a motion compensative prediction division 8 as motion compensation control data D4.

The inverse quantization division 4 applies inverse quantization to the decoded data D3 on the basis of the supplied quantization scale data D2, and sends the obtained DCT coefficient to an inverse DCT decoding division 5 as DCT coefficient data D5. Then, the inverse DCT decoding division 5 applies inverse DCT transform processing to the DCT coefficient data D5 given from the inverse quantization division 4, and sends the obtained pixel space data D6 to an adder 6.

The adder 6 performs addition of the pixel space data D6, which is given from the inverse DCT decoding division 5, and motion compensation data D7, which is supplied from the motion compensative prediction division 8 at this time, and then sends the resulted image data D8 of thus decoded and reproduced image to an image memory 7 and a format conversion division 9 as the image data D8.

Out of the image data D8 supplied from the adder 6, the image memory 7 retains, for example, two frames of which corresponding to intra (I) picture, predictive picture or the others, and it sends the image data D8 to the motion compensative prediction division 8.

On the basis of the motion compensation control data D4 supplied from the variable-length decoding division 3, the motion compensative prediction division 8 sends a null signal to the adder 6 as the above-mentioned motion compensation data D7 if what is processed at the time is I-picture, and if what is processed at the time is P-picture or bidirectionally predictive (B) picture, it sends the motion compensation data D7 formed by applying the stated motion compensation processing to the image data D8 to the adder 6 as above.

The format conversion division 9, on the basis of a control signal S1 given from a coefficient control division 10, applies the stated format-conversion processing to the image data D8 that is supplied from the adder 6, so as to convert the image format of the image data D8 from the HDTV format into the national television system committee (NTSC) format of 720 pixels × 480 lines, and then sends the resulting video data D12 to the stated television receiver and others via an output terminal 11.

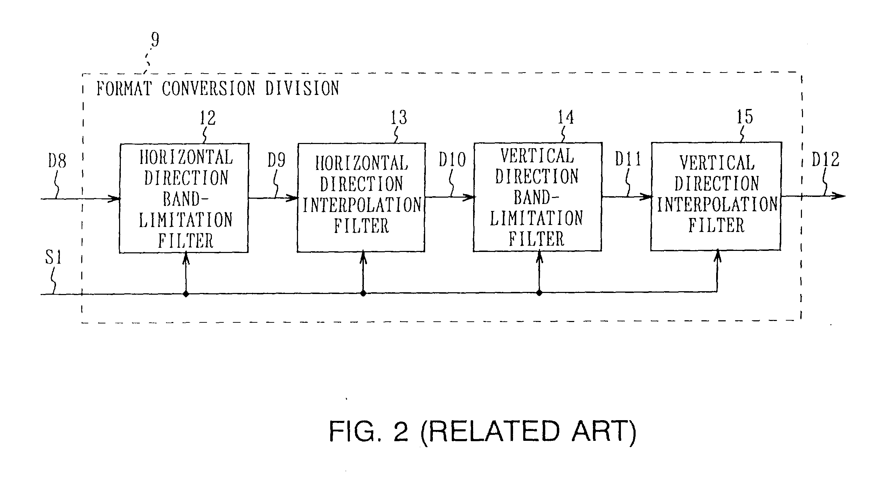

At here, in fact, the format conversion division 9 is constructed as shown in Fig. 2. On the basis of the control signal S1 that is given from the coefficient control division 10, a horizontal direction band-limitation filter 12, which is composed of a low-pass filter for horizontal direction, applies band-limitation processing for cutting high-frequency component that represents the detail portion of the image to the image data D8 that is supplied from the adder 6, and then sends the resulting horizontal direction band-limitation processed data D9 to a horizontal direction interpolation filter 13.

The horizontal direction interpolation filter 13 applies the stated horizontal direction interpolation processing to the horizontal direction band-limitation processed data D9 that is supplied from the horizontal direction band-limitation filter 12, on the basis of the control signal S1 that is given from the coefficient control division 10, and then sends the resulting horizontal direction interpolated data D10 to a vertical direction band-limitation filter 14, which is composed of a low-pass filter for vertical direction.

The vertical direction band-limitation filter 14 applies band-limitation processing for cutting high-frequency component that is representing the detail portion of the image to the supplied horizontal direction interpolated data D10, on the basis of the control signal S1 that is given from the coefficient control division 10, and then sends the obtained vertical direction band-limitation processed data D11 to a vertical direction interpolation filter 15.

The vertical direction interpolation filter 15 applies the stated vertical direction interpolation processing to the vertical direction band-limitation processed data D11 that is supplied from the vertical direction band-limitation filter 14, on the basis of the control signal S1 that is given from the coefficient control division 10, and then outputs the resulting video data D12 to the output terminal 11.

In the above-mentioned video decoding apparatus 1, the band-limitation processing and the interpolation processing are applied, in the format conversion division 9, to the image data D8 decoded into 1920-pixels × 1080-lines format, as stated above; therefore, such problems have existed that the configuration of the format conversion division 9 and the configuration of the entire video decoding apparatus 1 get complicated, and that the image format conversion processing in the format conversion division 9 also gets complicated.

As a result, such a problem has existed that the image format conversion processing in the format conversion division 9 of this video decoding apparatus 1 is slowed down.

Aspects of the present invention are set out in the claims to which attention is invited.

The present invention seeks to provide a decoding apparatus and a decoding method which are able to make image format conversion processing sufficiently easy in a practical sense.

A decoding device for decoding coded data that is formed by coding the video data by the stated coding processing including discrete cosine transform processing is provided. This decoding device comprises: band-limitation processing means for applying band-limitation processing, so as to cut the high-frequency component, to the discrete cosine coefficient data obtained by applying the stated first decoding processing that precedes inverse discrete cosine transform processing to the coded data; and interpolation processing means for applying interpolation process to the image data obtained by applying the stated second decoding processing that includes the inverse discrete cosine transform processing and the subsequent processing to the band-limitation processed data which is outputted from the band-limitation processing means, and for thereby converting the number of pixels of the frame image based on the image data in a manner that it becomes coincident with the number of pixels of frame image of the decoding object.

As a result, according to this decoding device, it is not necessary to individually provide the band-limitation processing means for the horizontal and vertical directions, and it is able to rapidly perform the band-limitation processing, because the band-limitation processing is applied to the discrete cosine coefficient before undergoing the inverse discrete cosine transform processing and that has less data quantity.

A method of decoding coded data formed by coding the video data by the stated coding processing including discrete cosine transform processing is provided. This decoding method comprises: a step of applying band-limitation process, for cutting the high-frequency component, to the discrete cosine coefficient data obtained by applying the stated first decoding processing that precedes inverse discrete cosine transform processing to the coded data; and a step of applying interpolation processing to the image data obtained by applying the stated second decoding processing that includes said inverse discrete cosine transform processing and the subsequent processing to the band-limitation processed data obtained by the preceding step, so as to convert the number of pixels of the frame image based on the image data in a manner that it becomes coincident with the number of pixels of said frame image of the decoding object.

As a result, according to this decoding method, it is not necessary to individually provide the band-limitation processing means for the horizontal and vertical directions, and it is able to rapidly perform the band-limitation processing, because the band-limitation processing is applied to the discrete cosine coefficient before undergoing the inverse discrete cosine transform processing and that has less data quantity.

For a better understanding of the present invention, reference will now be made by way of example to the accompanying drawings in which:
Fig. 1 is a block diagram illustrating a configuration of a conventional video decoding apparatus;
Fig. 2 is a block diagram illustrating the configuration of the format converting division;
Fig. 3 is a block diagram illustrating a configuration of a video decoding apparatus according to the preferred embodiment of the present invention;
Fig. 4 is a block diagram illustrating the configuration of the masking division;
Figs. 5A, 5B and 5C are conceptual diagrams used for explaining the controlling of the masking division;
Fig. 6 is a block diagram illustrating the configuration of the interpolation filter division; and
Figs. 7A and 7B are timing charts used for explaining the controlling of the interpolation filter division.

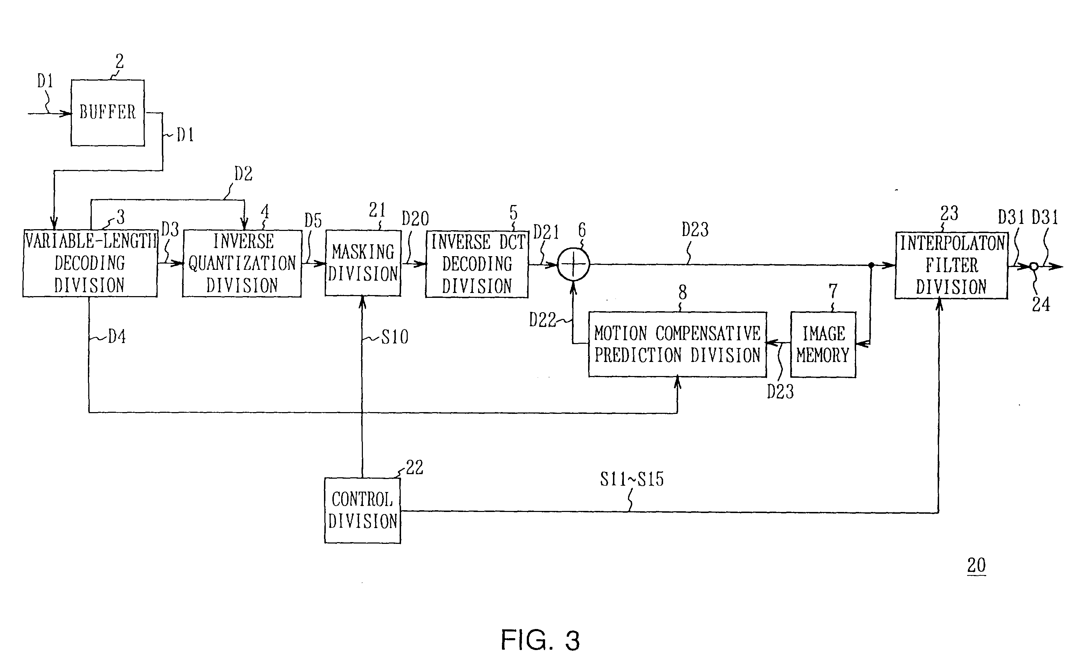

Referring to Fig. 3, which has the same reference numerals as those of Fig. 1 on the portions corresponding to the portions of Fig. 3, a video decoding apparatus 20 according to the embodiment of the present invention is constructed in the same way as the conventional video decoding apparatus 1 (Fig. 1), excepting that a masking division 21, a control division 22 and an interpolation filter division 23 are provided in place of the format conversion division 9 and the coefficient control division 10.

In the video decoding apparatus 20, the DCT coefficient data D5 that is outputted from the inverse quantization division 4 is given to the masking division 21.

The masking division 21 applies band-limitation processing that is performed in order to cut the high-frequency component representing the detail portion of the image and that is based on a first switching control signal S10 given from the control division 22 to the DCT coefficient data D5 given from the inverse quantization division 4, and then sends the obtained masking DCT coefficient to the inverse DCT decoding division 5 as a masking DCT coefficient data D20.

The inverse DCT decoding division 5 applies inverse DCT transform processing to the masking DCT coefficient data D20 given from the masking division 21, and then sends the obtained pixel space data D21 to the first adder 6.

The first adder 6 performs addition of the pixel space data D21, which is given from the inverse DCT decoding division 5, and motion compensation data D22, which is supplied from the motion compensative prediction division 8, and then sends the obtained image data D23 to the image memory 7 and to the interpolation filter division 23.

Out of the image data D23 supplied from the first adder 6, the image memory 7 retains, for example, two frames of which corresponding to I-picture, P-picture, or the others, and it sends the image data D23 to the motion compensative prediction division 8.

On the basis of the motion compensation control data D4 that is supplied from the variable-length decoding division 3, the motion compensative prediction division 8 sends a null signal to the first adder 6 as the motion compensation data D22 if what is processed at the time is I-picture, and if what is being processed at the time is P-picture or B-picture, it sends the motion compensation data D22 formed by applying the stated motion compensation operation to the image data D23 to the first adder 6.

On the other hand, the interpolation filter division 23 exposes the image data D23 given from the first adder 6 to the stated horizontal and vertical interpolation processing based on a second switching control signal S13 and the first to the fourth filter coefficient signals S11, S12, S14 and S15 that are given from the control division 22, and then sends the obtained video data D31 to the stated television receiver and others via an output terminal 24.

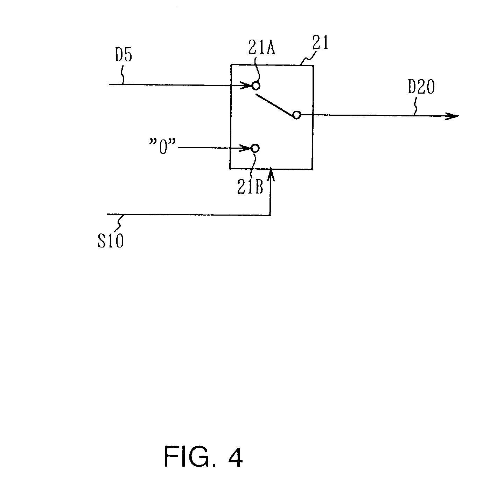

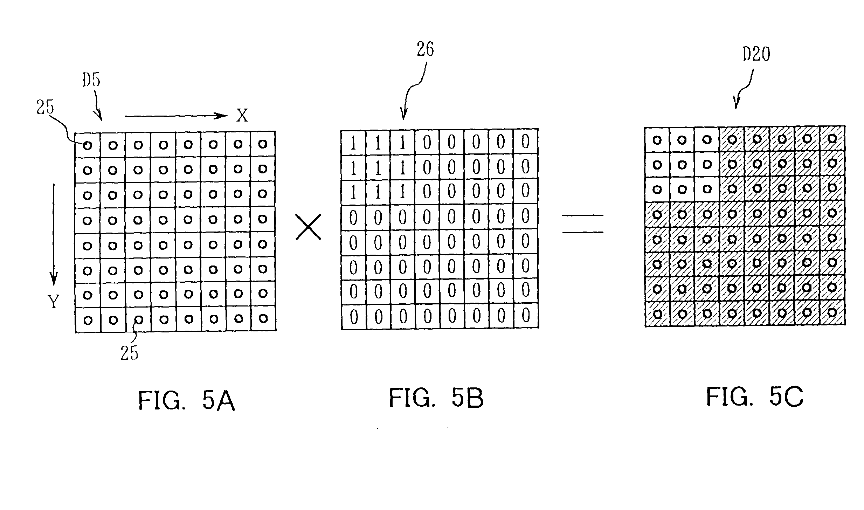

The masking division 21 has a switch circuit configuration as shown in Fig. 4. The DCT coefficient data D5, formed by sectioning the direct current (DC) component 25 that is shown in Fig. 5A and comprised of the luminance signal, the color-difference signal and others into subblocks that are comprised of 8 x 8 blocks, is given to the first change-over input terminal 21A of the masking division 21 from the inverse quantization division 4; the logic "0" level data (hereinafter, this is referred to as null signal) is always given to the second change-over input terminal 21B.

In addition, the first switching control signal S10 for switching between the first and the second change-over input terminals 21A and 21B is supplied to this masking division 21 from the control division 22, such that the first change-over input terminal 21A is selected at the time of the low-frequency component that is shown by 1 of the masking pattern 26, and the second change-over input terminal 21B is selected at the time of the high-frequency component that is shown by 0 of the masking pattern 26, in accordance with the masking pattern 26 shown in Fig. 5B.

By switching between the first and the second change-over input terminals 21A and 21B in this manner on the basis of the first switching control signal S10, the masking division 21 generates the masking DCT coefficient data D20 shown in Fig. 5C that is formed by cutting the horizontal high-frequency component and the vertical high-frequency component (X-direction and Y-direction in Fig. 5A, representing the detail portions of the video image, of the DCT coefficient data D5; then it sends this masking DCT coefficient data D20 to the inverse DCT decoding division 5 as the masking DCT coefficient data D20, as stated above.

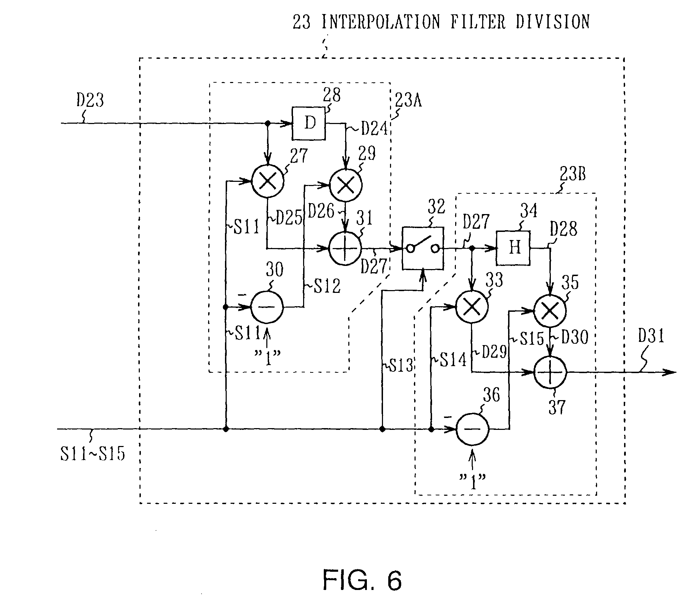

On the other hand, the interpolation filter division 23 is constructed by connecting the filter division 23A for horizontal direction interpolation processing with the filter division 23B for vertical direction interpolation processing via the change-over switch 32, as shown in Fig. 6.

In this case, in the horizontal direction interpolation filter division 23A, the image data D23 that is given from the first adder 6 is inputted to the first multiplier 27 and to the one-clock-delay circuit 28. At this time, to the first multiplier 27, the first filter coefficient value of the range 0 to 1 is supplied from the control division 22 as the first filter coefficient signal S11; in this way, the first multiplier 27 multiplies the image data D23 by the first filter coefficient value that is obtained on the basis of the first filter coefficient signal S11, for each pixel, and then sends the resulted product to the second adder 31 as first multiplication data D25.

The one clock delay circuit 28 delays the supplied image data D23 by one clock of the reference clock that is given from the clock source not shown, with respect to each pixel, and then sends this to the second multiplier 29 as the delayed pixel data D24.

At this time, to the second multiplier 29, the second filter coefficient value that is obtained by subtracting the first filter coefficient value obtained on the basis of the first filter coefficient signal S11 from 1 is given from a first subtracter 30, as the second filter coefficient signal S12. Then, the second multiplier 29 multiplies the delayed pixel data D24 by the second filter coefficient value that is obtained on the basis of the second filter coefficient signal S12, with respect to each pixel, and then sends the resulting product to the second adder 31 as the second multiplication data D26.

The second adder 31 sequentially performs addition of the respectively supplied first multiplication data D25 and second multiplication data D26, for each pixel, and then sends thus obtained image data D27 formed through horizontal interpolation processing to the change-over switch 32.

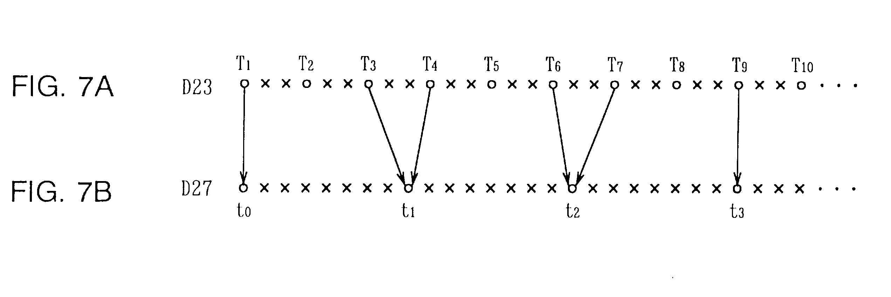

At this time, from the control division 22, the change-over switch 32 receives the second switching control signal S13 for switching the change-over input terminal 32A so as to perform interpolation processing of the image data D23 shown in Fig. 7A into the image data D27 shown in Fig. 7B, and then it switches the change-over input terminal 32A on the basis of the second switching control signal S13.

When the change-over input terminal 32A is ON, the interpolation processing in horizontal direction is applied to the image data D23 of, for instance, the time points T₃ and T₄ in the horizontal direction interpolation filter division 23A, and the obtained image data D27 of the time point t₁ is supplied to the vertical direction interpolation filter division 23B. On the other hand, when the change-over input terminal 32A is OFF, the interpolation processing is not performed, as the image data D23 of, for instance, the time point T₂, because the first and the second filter coefficient signals S11 and S12 are not supplied to the first and the second multipliers 27 and 29 and also to the first subtracter 30.

In the vertical direction interpolation filter division 23B, the image data D27 that is given via the change-over switch 32 is inputted to the third multiplier 34 and to the one-line-delay circuit 34. At this time, to the third multiplier 33, the third filter coefficient value of the range 0 to 1 is supplied from the control division 22 as the third filter coefficient signal S14; in this way, the third multiplier 33 multiplies the image data D27 by the third filter coefficient value that is obtained on the basis of the third filter coefficient signal S14, in units of a line, and then sends the resulted product to the third adder 37 as the third multiplication data D29.

The one line delay circuit 34 delays the supplied image data D27 by one clock of the reference clock given from the clock source which is not shown, in units of a line, and then sends this to the fourth multiplier 35 as the delayed line data D28.

At this time, to the fourth multiplier 35, the fourth filter coefficient value that is obtained by subtracting the third filter coefficient value obtained on the basis of the third filter coefficient signal S14 from 1, is given from a second subtracter 36, as the fourth filter coefficient signal S15. Then, the fourth multiplier 35 multiplies the delayed line data D28 by the fourth filter coefficient value that is obtained on the basis of the fourth filter coefficient signal S15 in units of a line, and then sends the resulting product to the third adder 37 as the fourth multiplication data D30.

The third adder 37 sequentially performs addition of the respectively supplied third multiplication data D29 and fourth multiplication data D30 in units of a line, and then sends thus obtained video data D31 formed through vertical interpolation processing to the output terminal 24.

In the above configuration, this video decoding apparatus 20 exposes the supplied coded-data D1 to the variable-length decoding processing, the inverse quantization processing, the inverse DCT decoding processing and the motion compensation processing, in order, in the variable-length decoding division 3, the inverse quantization division 4, the inverse DCT decoding division 5 and the first adder 6, so as to perform the decode processing of the coded data D1; on the other hand, the video decoding apparatus 20 exposes the DCT coefficient data D5 that is outputted from the inverse quantization division 4 to the band-limitation processing for cutting the high-frequency components in the masking division 21, and also exposes the image data D8 that is outputted from the first adder 6 to the interpolation processing of the horizontal and vertical directions in the interpolation filter division 23, so as to execute the conversion processing of the image format.

Therefore, in this video decoding apparatus 20, it is not required to provide a band-limitation processing circuit for horizontal direction and a band-limitation processing circuit for vertical direction individually, because the band-limitation processing is applied to the coded data D1 in the phase of DCT coefficient, and it is able to speedily perform the band-limitation processing, because the band-limitation processing is applied in the phase of the DCT coefficient with less data quantity before the inverse DCT decoding processing.

According to the above configuration, this video decoding apparatus 20 exposes the supplied coded-data D1 to the variable-length decoding processing, the inverse quantization processing, the inverse DCT decoding processing and the motion compensation processing, in order, in the variable-length decoding division 3, the inverse quantization division 4, the inverse DCT decoding division 5 and the first adder 6, so as to perform the decode processing of the coded data D1; on the other hand, the video decoding apparatus 20 exposes the DCT coefficient data D5 that is outputted from the inverse quantization division 4 to the band-limitation processing for cutting the high-frequency components in the masking division 21, and exposes the image data D8 that is outputted from the first adder 6 to the interpolation processing of the horizontal and vertical directions in the interpolation filter division 23, so as to execute the conversion processing of the image format; so that it is not required to provide the band-limitation processing circuit for horizontal direction and the band-limitation processing circuit for vertical direction individually, because the band-limitation processing is applied to the coded data D1 at its phase of DCT coefficient, and it is able to speedily perform the band-limitation processing, because the band-limitation processing is applied in the phase of the DCT coefficient with less data quantity before the inverse DCT decoding processing; in this way, it is able to realize a video decoding apparatus 20 capable of making the conversion processing of the number of pixels sufficiently easy in a practical sense.

In the above embodiment, such a case is described that the decoding apparatus to which the present invention is applied is the video decoding apparatus 20, however the present invention is not limited to this case. To be short, embodiments of the present invention are widely applicable to the other various configurations of decoding apparatuses for decoding the supplied coded data D1 by the stated decoding processing.

Besides, in the above embodiment, the description is given of the case where the band-limitation processing and the interpolation processing are performed for the horizontal and the vertical directions so that the number of pixels of the pixel format of the decoded image data D23 is converted from the HDTV system pixel format of 1920-pixels x 1080-lines to the NTSC system pixel format of 720-pixels x 480-lines, however the present invention is not limited to this case. To the short, embodiments of the present invention are widely applicable to the other various processing methods of converting the number of pixels and the other various pixel format for converting the pixel format of the decoded image data D23 into the pixel format of the receiver for displaying the video image based on this.

Furthermore, in the above embodiment, the description is given of the case where the variable-length decoding division 3, the inverse quantization division 4 and the inverse DCT decoding division 5 are employed as the configurations of the first and the second decoding processing means, however the present invention is not limited to this case. To be short, the other various configurations can be applied to the first decoding processing means for converting the supplied coded data D1 into the DCT coefficient and the second decoding processing means for converting the DCT coefficient into the pixel space data D21.

Furthermore, in the above embodiment, the description is given of the case where the high-frequency components of the supplied DCT coefficient data D5 are cut in the masking division 21, on the basis of the masking pattern 26, as the masking processing, however the present invention is not limited to this case. To be short, embodiments are able to apply the other various processing for cutting the horizontal and vertical high-frequency components representing the detail portions of the video image to the supplied DCT coefficient data D5, as the masking processing.

Furthermore, in the above embodiment, the description is given of the case where the interpolation filter division 23 is constructed by connecting the horizontal direction interpolation filter division 23A with the vertical direction interpolation filter division 23B via the change-over switch 32, however the present invention is not limited to this case. For instance, the interpolation filter division 23 can be constructed so that the change-over switch 32 is placed on the stage preceding the horizontal direction interpolation filter division 23A; in brief, the other various configurations can be employed that are capable of processing interpolation of the given image data D23 into the corresponding image data D27.

As described above, according to an embodiment of the present invention, a decoding device is provided for decoding coded data formed by coding the video data by the stated coding processing including discrete cosine transform processing. The decoding device comprises: band-limitation processing means for applying band-limitation processing, so as to cut the high-frequency component, to the discrete cosine coefficient data obtained by applying the stated first decoding processing that precedes inverse discrete cosine transform processing to the coded data; and interpolation processing means for applying interpolation processing to the image data obtained by applying the stated second decoding processing that includes the inverse discrete cosine transform processing and the subsequent processing to the band-limitation processed data which is outputted from the band-limitation processing means, and for thereby converting the number of pixels of the frame image based on the image data in a manner that it becomes coincident with the number of pixels of said frame image that is the object of decoding. As a result, it is not necessary to individually provide the band-limitation processing means for the horizontal and vertical directions, and it is able to rapidly perform the band-limitation processing because the band-limitation processing is applied to the discrete cosine coefficient with less data quantity that is not yet exposed to the inverse discrete cosine transform processing; thus, it is able to realize a decoding device that makes it sufficiently easy in a practical sense to convert the number of pixels.

Also, according to an embodiment of the present invention, a method is provided of decoding coded data formed by coding the video data by the stated coding processing including discrete cosine transform processing. The decoding method comprises: a step of applying band-limitation processing, for cutting the high-frequency component, to the discrete cosine coefficient data obtained by applying the stated first decoding processing that precedes inverse discrete cosine transform processing to the coded data; and a step of applying interpolation processing to the image data obtained by applying the stated second decoding processing that includes said inverse discrete cosine transform processing and the subsequent processing to the band-limitation processed data obtained by the preceding step, so as to convert the number of pixels of the frame image based on the image data in a manner that it becomes coincident with the number of pixels of said frame image of the decoding object. As a result, it is not necessary to individually perform the band-limitation processing with respect to the horizontal and vertical directions, and it is able to rapidly perform the band-limitation processing because the band-limitation processing is applied to the discrete cosine coefficient, having less data quantity, that is not yet exposed to inverse discrete cosine transform processing; in this way, it is able to realize a decoding method that makes the conversion processing of the number of pixels sufficiently easy in a practical sense.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A decoding device for decoding coded data formed by coding the video data by the stated coding processing including discrete cosine transform processing, said decoding device comprises:
first decoding means for applying the stated first decoding processing that precedes inverse discrete cosine transform processing to said coded data;
band-limitation processing means for applying band-limitation processing to the discrete cosine coefficient data that is outputted from said first decoding means, so as to cut the high-frequency component;
second decoding means for applying the stated second decoding processing that includes said inverse discrete cosine transform processing and the subsequent processing to the band-limitation processed data which is outputted from said band-limitation processing means; and
interpolation processing means for applying interpolation processing to the image data that is outputted from said second decoding means, and for thereby converting the number of pixels of the frame image based on the image data in a manner that it becomes coincident with the number of pixels of said frame image of the decoding object.

2. The decoding device according to claim 1, wherein
said band-limitation processing means comprises:
a switch circuit for inputting said discrete cosine coefficient data to the first change-over terminal and for inputting the logic "O" level data to the second change-over terminal;
control means for performing change-over controlling of said switch circuit; and
said control means performs change-over controlling of said switch circuit on the basis of the previously given masking data, and hereby applies said band-limitation processing that is corresponding to said masking data to said discrete cosine coefficient data.

3. A decoding method for decoding coded data formed by coding the video data by the stated coding processing including discrete cosine transform processing, said decoding method comprises:
a first step of applying the stated first decoding processing that precedes inverse discrete cosine transform processing to said coded data;
a second step of applying band-limitation processing to the discrete cosine coefficient data obtained by said first step, so as to cut the high-frequency component;
a third step of applying the stated second decoding processing that includes said inverse discrete cosine transform processing and the subsequent processes to the band-limitation processed data obtained by said second step; and
a fourth step of applying interpolation processing to the image data obtained by said third step, so as to convert the number of pixels of the frame image based on the image data in a manner that it becomes coincident with the number of pixels of said frame image of the decoding object.

4. The decoding method according to claim 3, wherein
at said second step,
on the basis of the previously given masking data, said discrete cosine coefficient data and the logic "0" level data are switched and outputted, so that said band-limitation processing that is corresponding to said masking data is applied to said discrete cosine coefficient data.
